# EUROPEAN PATENT SPECIFICATION

(11) **EP 0 433 436 B1**
(45) Date of publication and mention of the grant of the patent: **10.06.1998**
(21) Application number: 90911335.9
(22) Date of filing: 03.07.1990
(51) Int. Cl.: G01N 35/02

(54) **ASSEMBLY FOR REMOVING WASTE FROM CLOSED SAMPLE CONTAINERS**
VORRICHTUNG ZUR ENTFERNUNG VON RÜCKSTÄNDEN AUS VERSCHLOSSENEN PROBEGEFÄSSEN
ASSEMBLAGE SERVANT A RETIRER LES SUBSTANCES RESIDUAIRES DE RECIPIENTS FERMES CONTENANT DES ECHANTILLONS

(30) Priority: 07.07.1989 US 376714
(43) Date of publication of application: 26.06.1991
(73) Proprietor: DADE BEHRING INC., Deerfield, Illinois 60015 (US)
(72) Inventor: STARK, William, A., Costa Mesa, CA 92626 (US); ROGERS, Kenneth, R., Elk Grove, CA 92624 (US); HADDAD, Antoine, E., El Toro, CA 92630 (US)
(74) Representative: MacGregor, Gordon
(86) International application number: US9003774
(87) International publication number: WO9101007

(56) References cited:
- EP-A- 41 378
- EP-A- 42 036
- EP-A- 275 119
- EP-A- 355 823
- WO-A-89/04955
- WO-A-89/12829
- DE-A- 2 600 299
- GB-A- 2 095 403
- US-A- 4 484 483
- US-A- 4 595 562

## Description

This application is a continuation-in-part of application Serial 210,695, filed June 23, 1988, for a "System For Providing Access To Sealed Containers."

### BACKGROUND OF THE INVENTION

### Field Of The Invention

The present invention generally relates to an assembly for removing or displacing waste from the inside of a closed sample container, and more particularly to a waste removal assembly used in conjunction with an automatic sampler system which provides a temporary opening in the closure of a sample container.

### Description Of The Prior Art

The prior art provides a number of automatic sampling systems. Generally, these systems receive sample containers, remove a predetermined quantity of sample from each container at a first location, and transfer the removed sample to a second location for analysis. The sample containers usually used with these systems are open-top vials or tubes transported in the system on carousels and transferred between carousels with mechanical push-arms and other similar devices.

Using open sample containers in an automatic sampling system presents a number of problems. First, the various forces which move the container through the system may cause spills and contamination. Second, open sample containers may expose an operator to any harmful substances disposed in the containers. Finally, because open containers require special care, the cost of operation increases.

One solution to these problems is to use closed containers in an automated system which can form a temporary opening in the stopper of a closed container. However, using this system presents other problems. Specifically, the sample in the container, e.g., blood serum, may splash against the side of the container and on the bottom of the container stopper in response to operator handling and/or movements of the container in the system. Some of the sample which contacts the bottom of the stopper may adhere to the stopper and may contaminate the puncture tube which provides a temporary opening through which the system conducts sampling operations.

Thus, a through the stopper sampling system must include means for removing any sample or debris from the bottom of the stopper and the surrounding area immediately before the system moves the puncture tube through the stopper. It must remove this debris quickly and efficiently; and it must do so through the stopper without removing the stopper.

The waste removal assembly of the present invention used in conjunction with a through the stopper sampling system fulfills the above requirements. It is a simple and fully automated assembly which minimizes the expense of manufacture and assembly and gives precise, uniform, and reliable performance. It allows the automated sampling system to remove waste from the bottom of the stopper and the surrounding area of each sample tube before the system performs sampling operations through the stopper.

GB-A-2095403 discloses a method and apparatus, for taking samples from stoppered containers. A needle penetrates the stopper to withdraw a sample. After sampling, wash liquid is passed through the needle to clean it.

The distinguishing features of the invention are set out in Claim 1.

The invention also provides a method for automatically cleaning the inside surface of a stopper which closes a container containing a sample said method utilizing means for holding said container, a hollow needle having a sharp distal end portion and an opening, proximate thereto for penetrating the stopper of said container, driving means for providing relative displacement between said container and said needle and for providing the force for moving said needle into said container, and pump means communicating with said needle for removing the waste material from the inside surface of said stopper, said method comprising moving said needle into said container through said stopper to a position in which the sharp distal end is above the level of the sample and operating the pump to withdraw waste from said inside surface of said stopper under negative pressure through the needle to a waste container, prior to sampling.

In one embodiment, a waste removal assembly includes a hollow needle means with an open, first end secured to a needle support member and a second, distal end defining a sharp point and including at least one opening. Passageway means connects the first end of the needle means to a pump. The pump removes, through the passageway means, any material in the needle means or any material proximate the opening at the sharp, second end of the needle means. The pump also moves the debris from the passageway means to a waste disposal container.

A lift means disposed proximate the needle means receives a sample container and moves the stopper of the container against the needle means. The lift means provides the force required for puncturing the stopper with the needle; and it moves the container a predetermined distance so that the needle means extends through the stopper and into the container. In this position, the opening at the second, sharp end of the needle lies proximate the inner surface of the container stopper where it may remove debris adhered to the surface. Alternatively, the sample container may remain stationery and the needle support member may move the needle into and through the stopper of the container.

A carousel (or any other suitable transport means) in an automated sampling system moves the sample containers to a first location where the lifting means receives two adjacent or consecutive sample containers. It lifts the two containers simultaneously, a first one against the needle means and the other, second container against a hollow puncture tube. The lift means continues to lift the two containers until the needle means punctures the stopper of the first container and extends into the first container and until the puncture tube punctures the stopper of the second container and extends into the second container.

When the lift means stops lifting, the puncturing end of the needle means lies proximate the inside surface of the stopper of the first container. There, the needle means removes debris from the bottom of the stopper. Then, a vent means vents the first container through the needle means and brings the sample in this container to atmospheric pressure.

When the lift means stops lifting, the puncturing end of the puncture tube lies proximate the stopper a predetermined distance above the sample in the second container. The puncturing end of the tube is bevelled with a sharpened lower most portion and a rounded and polished heel which facilitate penetration without coring the stopper. While the system removes waste material from the first container, it performs sampling operations through the puncture tube, i.e., it removes a sample from the second container, places sample into the second container, or senses the properties of the sample in the second container.

After completion of the operations described above, a stripper means disengages the containers from the needle means and from the puncture tube and moves them back onto the carousel. The carousel then moves the cleaned first container to the position previously occupied by the sampled second container. Thus, each incremental rotation of the carousel brings a container from the cleaning position to the sampling position.

### BRIEF DESCRIPTION OF THE DRAWINGS

For a more complete understanding of this invention, one should now refer to the embodiment illustrated in greater detail in the accompanying drawings and described below by way of an example of the invention. In the drawings:

FIG. 1 is a perspective view of an automated sampling system which includes the waste removal assembly of the present invention.

FIG. 2 is a sectional view of a sample container of a type used in the sampling system of Fig. 1.

FIG. 3 is a partial, exploded view of the carousel which holds the sample containers which the system samples.

FIG. 4 is a schematic view of the waste removal assembly of the present invention.

FIG. 5 is a side elevation view of the lifting mechanism for the waste removal assembly.

FIG. 6 is a side elevation view of the puncturing and stripper mechanisms with portions broken away to expose their construction. This figure also includes two sample containers disposed below the needle and the hollow puncture tube.

FIG. 7 is a partial side elevation view of the puncture tube used in the automated, through-the-stopper sampling system shown in FIG. 1.

FIG. 8 is an auxiliary elevation view of the puncturing end or face of the puncture tube.

FIG. 9 is a partial cross-sectional view taken along line 9-9 in FIG. 8.

FIG. 10 is a partial cross-sectional view taken along line 10-10 in FIG. 8.

FIG. 11 is a partial cross-sectional view taken along line 11-11 in FIG. 8.

FIG. 12 is a partial cross-sectional view taken along line 12-12 in FIG. 8.

FIG. 13 is a partial cross-sectional view of the needle used in the waste removal assembly.

FIG. 14 is a partial cross-sectional view of an alternative embodiment of the waste removal needle.

FIG. 15 is a side elevation view of the needle and the puncture tube proximate two sample containers, showing the relative displacement of the containers with respect to the needle and puncture tube. The needle and puncture tube appear above the containers in solid lines and in the containers in phantom lines after they have punctured through the stoppers.

FIG. 16 is a schematic view of the pump and waste container used to evacuate the needle and the passageways and valves used to vent the needle to atmospheric pressure.

### DETAILED DESCRIPTION OF THE DRAWINGS AND A PREFERRED EMBODIMENT

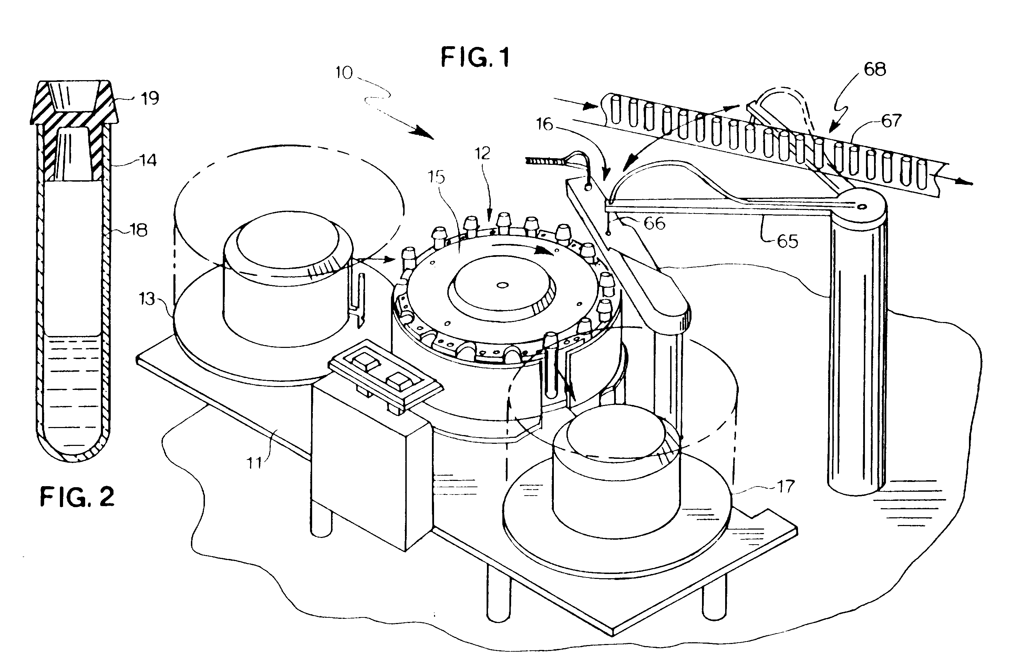

Turning now to the drawings, Fig. 1 illustrates an automatic sampling system at 10. This system includes a base plate 11 for supporting a carousel assembly 12, including a loading carousel 13 which provides closed sample containers 14 to the system, a transfer carousel 15 for receiving the sample containers 14 from the loading carousel 13 and moving them to a first location 16, and an unloading carousel 17 which receives the containers from the transfer carousel 15 and stores them for retrieval by an operator. Liston et al. US-A-4,595,562 discloses the carousel assembly 12 in greater detail. With this reference, the applicants incorporate the disclosure of that patent to the disclosure of the present application.

The closed container 14 used with the system 10 and shown in Fig. 2 is preferably a glass tube 18 with an open top and a stopper 19 which normally closes the top opening. In addition, the stopper 19 is a self-sealing material, e.g., rubber, which can hermetically close a small slit or hole made in it by a slender puncture tube or needle. Alternatively, the system 10 may use containers of any suitable shape made of any suitable fluid-tight material. Also, the closure may be any suitable device with components which allow a penetrating member to displace them and define an opening through the closure, as described below.

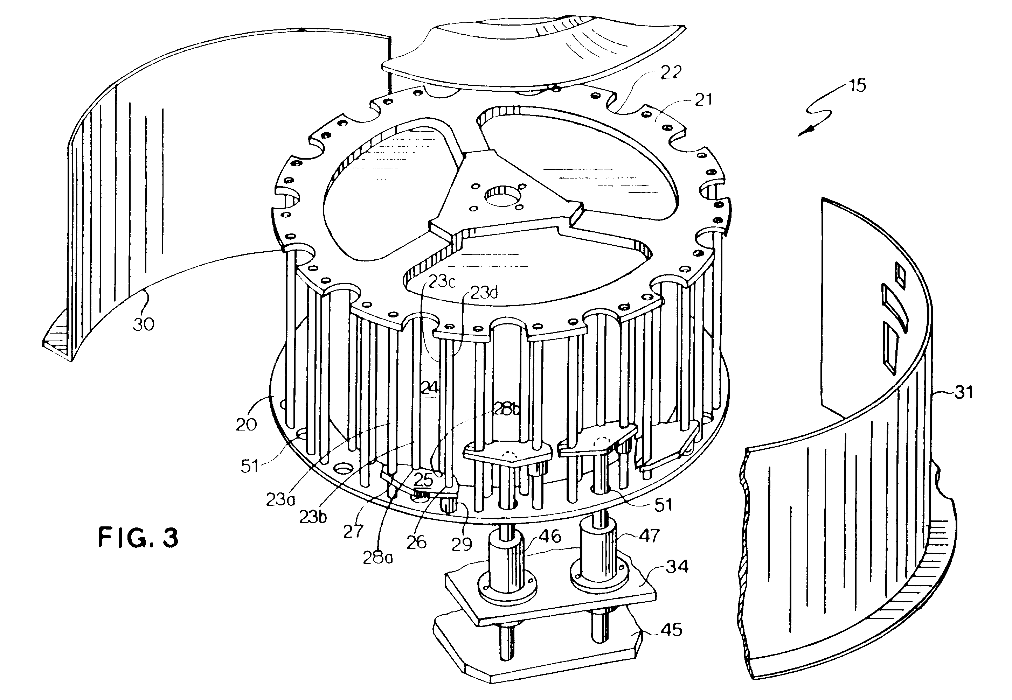

The transfer carousel 15 (See Fig. 3) includes a bottom plate 20 with a flat, ring-like configuration. It also includes a top plate 21 which has the shape of a spoke wheel with semi-circular slots 22 formed in its periphery. The spacing between these slots is constant, and their size and shape generally coincides with the cross-sectional dimensions of the sample container 14 used with the system 10. A post 23a, two rollers 23b and 23c, and a post 23d disposed vertically around each slot and between the bottom plate 20 and the top plate 21 define a compartment 24 for receiving a container 14. Each one of the posts 23a and 23d lies fixedly secured at one end to the plate 20 and at its other end to the plate 21. Similarly, each one of the rollers 23b and 23c lies rotatably mounted at one of its ends to the plate 20 and at the other end to the plate 21.

Each compartment 24 contains a platform member 25 which supports a sample container 14. This platform 25 is a flat, horizontal member with an opening 26 through which the post 23d extends, in sliding engagement with the platform. In addition, the platform 25 has one guide slot 27 and clearance slots 28a and 28b formed around its periphery. The slot 27 co-acts with the post 23a to maintain the platform in alignment in the compartment 24. Finally, the platform 25 includes a guide sleeve 29 secured to the bottom of the platform member 25 and disposed around the post 23d, in sliding engagement with the post 23d, to further maintain the platform in alignment.

Two cover plates 30 and 31 close the compartments 24 around the periphery of the transfer carousel 15, except at the location where the transfer carousel 15 receives a container from the loading carousel 13 and where it transfers the container to the unloading carousel 17. Suitable connecting devices secure these plates 30 and 31 to the base plate 11 around the transfer carousel. These plates do not contact the transfer carousel 15; they merely prevent the containers 14 from falling out of their compartments 24.

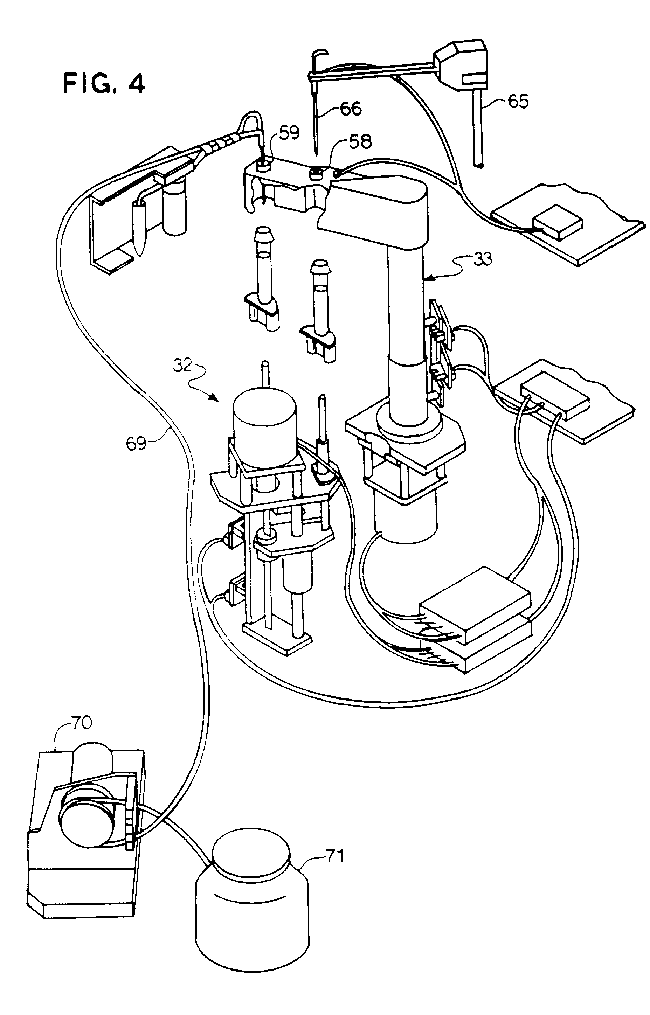

A lift mechanism 32 and a puncturing mechanism 33, disposed at the first location 16 (See Fig. 4), temporarily open the closure or stopper 19 of two consecutive or adjacent containers 14 placed there by the transfer carousel 15. The lift mechanism 32 drives two adjacent platforms 25 disposed at the first location and raises the containers 14 from a lowered position to a raised position. As the lifting mechanism 32 lifts the two containers 14, the puncturing mechanism 33 receives them and forms a temporary opening in the stoppers 19 of each container using the force provided by the lifting mechanism 32, as described below.

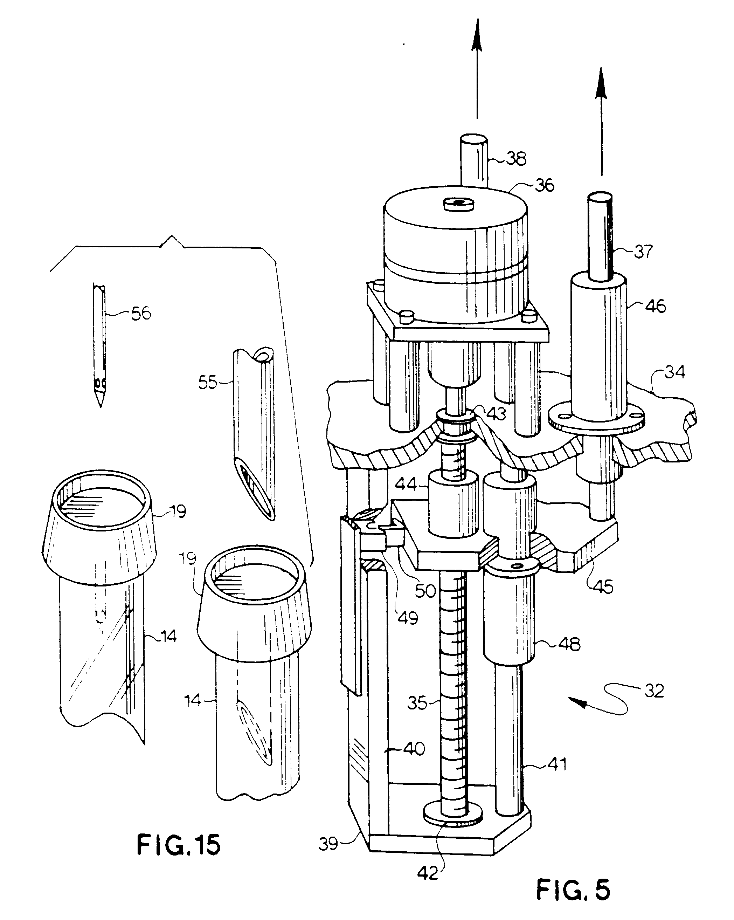

The lift mechanism 32 (shown in Fig. 5) includes a horizontal plate 34 for fixedly securing the mechanism 32 to the base plate 11. It also includes a lead screw-type drive 35 powered by a motor 36 and used to move two plungers 37 and 38 vertically between a lowered and a raised position. A support frame 39, including an L-shaped member 40 and a guidepost 41 maintain the lead screw-type drive 35 in vertical and horizontal alignment, journaled between a bearing 42 secured to the bottom of the member 40 and a bearing 43 secured in an opening through the plate 34. A nut 44 mounted on the lead screw-type drive 35 moves vertically in response to the rotation of the drive; and a horizontally disposed connecting plate 45 secured to the nut 44 moves with it to drive the plungers 37 and 38.

To maintain the plungers 37 and 38 in vertical alignment, the mechanism 32 includes guide sleeves 46 and 47 (See Fig. 3) disposed vertically around the plungers 37 and 38, respectively, and fixedly secured to the horizontal plate 34. A third guide sleeve 48 disposed vertically around the post 41 and secured to the plate 45 maintains the plate 45 in horizontal alignment.

To control the movement of the nut 44 and, accordingly, the plungers 37 and 38, the system 10 includes electronic controls, including a top sensor 49 and a bottom sensor (not shown), which sense the presence of a contact 50 secured to the plate 45. Using the signal provided by these sensors, the electronic controls operate the motor 35 to move the nut 44 between upper and lower limits. The plungers 37 and 38 move from a lowered position where they lie below the bottom plate 20 of the transfer carousel 15 to a raised position.

Specifically, the plungers 37 and 38 move through openings 51 (See Fig. 3) formed in the plate 20 under each compartment 24, engage the bottom of platforms 25 disposed in two adjacent compartments 24, and drive the platforms upward along with the containers 14 which they support. Accordingly, the containers 14 move partially out of their respective compartments 24 and into engagement with the puncturing mechanism 33, as described below.

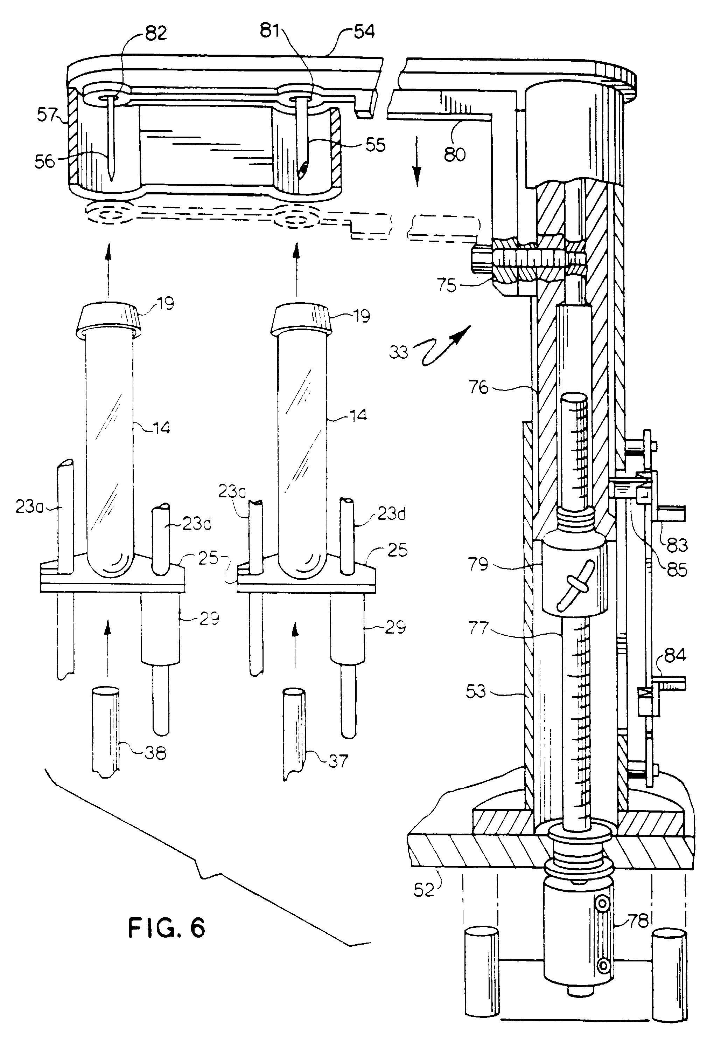

Turning now to Fig. 6, the puncturing mechanism 33 includes a securing plate 52 for attaching the mechanism 33 to the base plate 11 and a vertical support member 53 fixedly secured to the securing plate 52. The vertical member is a hollow tube made of metal or any other suitable material of high strength and rigidity. It supports a horizontal, cantilever member 54 fixedly secured to its top end. This horizontal support 54 supports a puncture tube 55 and a cleaning needle 56 in place at the first location 16.

The puncturing mechanism 33 also includes a transparent plastic shield 57 which extends around and downward of the member 54, secured to the bottom of this member. It shields the puncture tube 55 and the cleaning needle 56. It receives the tops of containers 14 and prevents the operator from touching the sharp ends of the puncture tube 55 and the needle 56, protecting the operator from injury.

The puncture tube 55 is a round and hollow, non-coring tube open at both ends and made of metal or any other suitable material. It lies disposed vertically and downwardly from the support member 54. A fitting releasably secures the tube 55 to the member 54; and the tube's central bore defines an opening 58 (See Fig. 4) which extends vertically through the member 54. The bottom end of the tube cuts an arcuate opening in the stopper and pushes the cut portion of the stopper to the side, thus forming a temporary opening through the stopper 19. Upon removal of the tube, the cut portion moves back in place; and the stopper reseals itself.

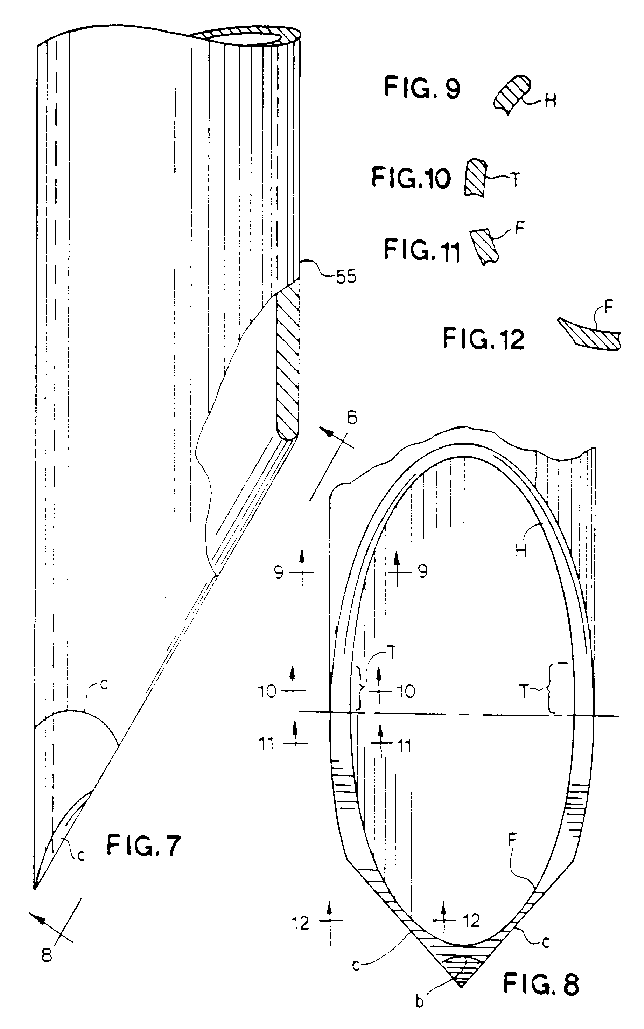

The bottom end of the puncture tube 55 (See Fig. 7-12) is bevelled and generally defines an oval face as shown in Fig. 8. This face is symmetric about its longitudinal center line and includes a heel portion H, a transition portion T disposed between the heel portion H and the transverse center line of the oval face, and a front portion F disposed between the transverse center line and the lowermost tip of the tube 55. The heel portion H is a semi-circular edge cut to a full radius and polished to a smooth finish. The transition portion varies from a semi-circular shape at the heel end to a flat shape at the transverse center line. Finally, the front portion F is flat; and two cut-out portions C sharpen the front tip to facilitate puncturing.

The angle a of the bevelled bottom end of the tube 55 and the configuration of the front portion F determine the force required for the tube 55 to puncture a stopper 19. By decreasing the angle a one may reduce the puncturing force. Moreover, by providing a sharp tip with the cut-outs C, one may further reduce the puncturing force. Thus, the front portion F allows quick and easy puncturing of a stopper 19 and movement of the tube 55 through the stopper.

While the front portion F allows easy movement of the tube 55 through a stopper 19, the heel portion H insures against coring of the stopper. As stated above, it has a smooth, round surface which does not cut the stopper 19. It merely pushes the cut portion downwardly and away from the tube 55.

By way of a specific example, a puncture tube 55 for use in a system 10 has a length of 1.500 inches obtained to a nominal tolerance specification of +0.000-0.005. It has an outside diameter of 3.4 mm +0.02-0.02 (0.134 inch +0.001-0.001) and an inside diameter of 2.9 mm +0.05-0.05 (0.114 inches + 0.002-0.002).The angle a of the bevelled bottom end is 30°; and the angle b between the two lines of intersection formed by the cut-outs C and the flat front portion F of the bevelled face is 85°.

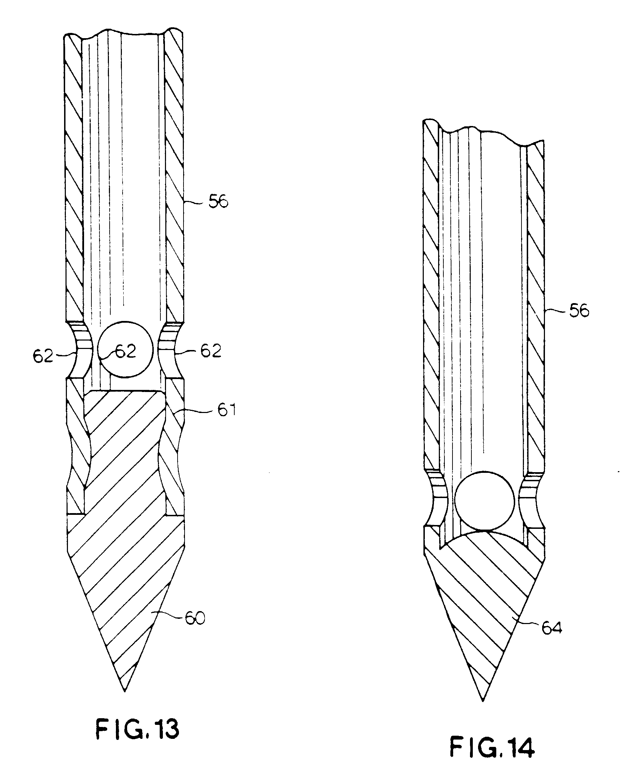

The needle 56 also lies vertically and downwardly from the support member 54. It extends through an opening (not shown) in the member 54; and a fitting 59 (See Fig. 4) removably secures the needle, with a threaded connection (or other similar connection), to the member 54. The needle 56 is a hollow, round tube made of metal or any other suitable material. It has an outer diameter substantially smaller than the diameter of puncture tube 55 (e.g., 2.13 mm (0.084 inches). Its top (first) end lies above member 54 and its bottom (second) end lies below it. The bottom end (See Fig. 13) is a closed sharp tip formed by inserting a premachined tip section 60 into the bottom end of the needle's tube body 61. By pinching or welding the tube body 61 into the tip 60, one secures the tip 60 in place. Alternatively, the needle 56 may have a sharp, solid tip 64 integrally formed with the tube body 61 (See Fig. 14).

The needle 56 includes a first set of four, round openings 62 having axes which lie on the same plane, 90° apart. These openings 62 lie proximate the top end of the tip 60 to prevent debris from collecting between the bottom of the openings 62 and the top of the tip 60. With this opening configuration, the needle may establish communication with the area around the entire periphery of its penetrating end without weakening the body 61. Alternatively, the needle may have any other suitable opening configurations with one set or many sets of openings or with openings staggered around the needle at various distances from the tip of the needle and/or from each other.

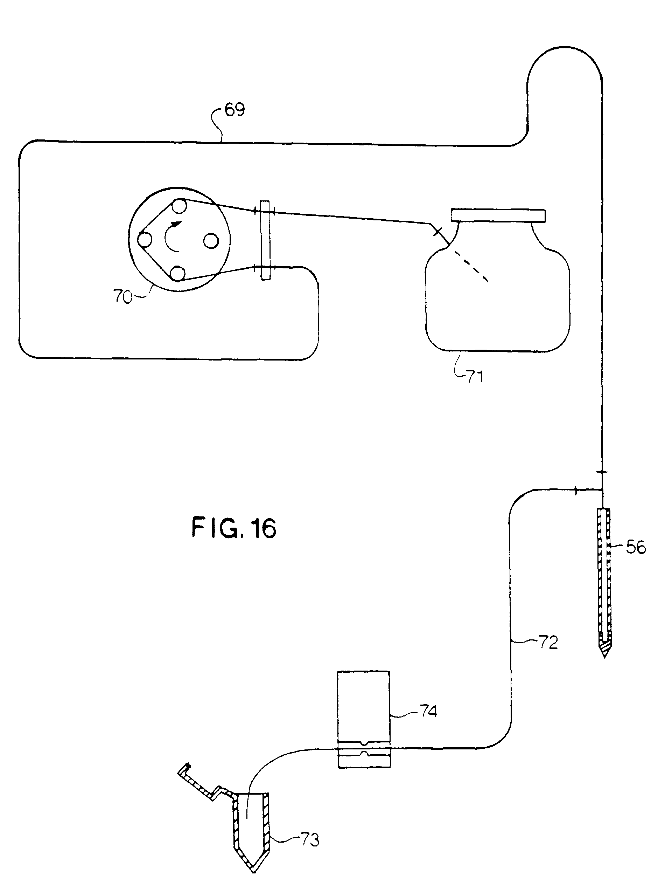

At location 16, the puncture tube 55 lies above the plunger 37 and the needle 56 lies above the plunger 38. As stated above, these plungers drive containers 14 disposed in adjacent compartments 24. As the lift mechanism 32 lifts the containers 14 upwardly, the puncture tube 55 and needle 56 engage the stoppers 19 of the corresponding containers 14, move through the stoppers, and into the containers 14 (See Fig. 15).

The distance which the lift mechanism lifts the containers 14 and the length of the puncture tube 55 determine the lowermost position of the puncture tube 55 in the container 14. Similarly, the lifting distance and the length of the needle 56 determine the lowermost position of the needle 56. At the lowermost position, the bottom end of puncture tube 55 lies below the stopper 19, a substantial distance above the level of the sample in the container 14; and the lower end of needle 56 lies above the level of the sample in its corresponding container 14, proximate the bottom surface of stopper 19 with the openings 62 disposed below this surface.

Once the puncture tube 55 and the needle 56 have established communication with the insides of two adjacent containers 14, a boom assembly 65 (See Fig. 1) moves a probe 66 into the container 14 through the puncture tube 55. This probe 66 is a tube connected to a pump and reservoir (not shown); and it removes a predetermined amount of the sample from the container 14. The boom assembly then transfers the sample to the cuvettes 67 of a continuous cuvette belt located at a second location 68. Alternatively, the probe may be a sensor which takes a reading from the sample disposed in the container 14 or a dispenser for dispensing material into the container.

While the system 10 conducts sampling operations through the puncture tube 55, it also cleans the stopper 19 and surrounding area of the adjacent tube 14 with the needle 56. (See Figs. 4 and 16) Tubing 69 connects the open top of the needle 56 to a pump 70 (e.g., a peristaltic pump) which activates when the lift mechanism 32 begins to raise the containers 14. The pump 70 continues to operate until the electronic controls of the system 10 deactivate it, after a predetermined time period.

While it operates, the pump 70 manipulates, i.e., decreases, the pressure and/or flow through the tubing 69 and the needle 56. Alternatively, the pump 70 may increase the pressure and/or flow. It removes debris and/or sample, e.g., blood serum, entrapped on the inside surface of the stopper 19 or otherwise displaces this waste away from the inside surface of the stopper and the surrounding inside surface of the container 14. It moves this waste through the openings 62 in the needle 56, through the needle 56 and the tubing 69, and into a waste container 71 for disposal. It does this by developing a negative pressure in the needle 56 and the tubing 69. The negative pressure that it develops must have an intensity sufficient to remove the waste but not the sample disposed generally at the bottom of the container 14.

After the pump 70 has stopped operating and drawing off waste, the system 10 vents the container 14 to atmosphere before withdrawing the needle 56. It does so through tubing 72 (See Fig. 16) which connects the top of the needle 56 with a waste container 73. A pinch valve 74 closes this tubing 72 until the system controls open the pinch valve and the tubing. This venting provides a rapid flow of air through the tubing 72 and the needle 56, and into the container 14. The negative pressure developed by the pump 70 in the container 14 causes this flow as venting occurs. The flow may provide additional flushing of any remaining sample and/or debris into the container 14. Alternatively, the system 10 may include a pump or other similar device to enhance this flow.

After venting the container 14, the pinch valve 74 remains open and closes again when the system moves the next container in position for waste removal or displacement. In emergency situations, when a positive pressure develops in the container 14 and the pinch valve does not close, the tubing 72 receives any serum which flows out of the container 14 through the needle 56. This serum flows into a waste container 73 for disposal.

After removing waste from one container 14 and sampling an adjacent container 14, a stripper mechanism 75 (See Fig. 6) disposed in the vertical support 53 of the puncturing mechanism 33 strips the stoppers 19 from the puncture tube 55 and the needle 56 as the lift mechanism 32 lowers its plungers 37 and 38. This mechanism 75 disengages the containers 14 from the puncturing mechanism 33 and allows them to move back into the compartments 24.

To perform this function, the stripper mechanism 75 includes a tubular member 76 disposed in sliding engagement in the hollow support or housing 53. A lead screw-type drive 77 powered by a motor 78 drives the member 76 up and down using a nut 79 mounted for vertical movement on the lead screw-type drive 77 and secured to the bottom end of the member 76.

Secured at the top end of member 76, a push arm 80 extends through a vertical slot in the housing 53 and engages the stoppers 19. This push arm 80 has a flat configuration with a central opening 81 through which the puncture tube 55 extends and a central opening 82 through which the needle 56 extends. The push arm 80 applies constant downward pressure around the top of the stoppers 19 to lower the containers 14 downward.

To define the upper and lower limits of movement of the sliding member 76, the electronic controls of the system 10 include a top stripper assembly sensor 83 and a bottom stripper assembly sensor 84 secured to the outside of the housing 53. These devices sense the presence of an optical flag 85. Suitable securing devices secure the optical flag 85 to the member 76; and the optical flag 85 extends through a vertical slot in the housing 53 to the outside of the housing 53 where the sensor 83 and 84 can detect it.

Using the signals provided by these sensors, the system's electronic controls operate the motor 78 to move the nut 79, and thus the push arm 80 between predetermined upper and lower limits. The stripper mechanism moves this push arm 80 from a raised position proximate the horizontal support member 54 of the puncturing mechanism 33 to a lower position below the bottom end of the puncture tube 55 and the needle 56 and then back up again.

After the stripper mechanism 33 disengages the containers 14 from the puncture tube 55 and the needle 56, and, along with the lift mechanism, lowers the container in the compartments 24, the drive (not shown) of the transfer carousel 15 rotates the carousel 15 and moves a new container 14 under the needle 56; it moves the container 14 previously disposed under the needle 56 to a position below the puncture tube 55; and it moves the sample container 14 previously disposed in the position under the tube 55 toward the unloading carousel 17. The system repeats the above procedures; sampling and waste removal continue; and the system 10 transfers the spent containers 14 from the transfer carousel 15 to the unloading carousel 17.

The system 10 performs the cleaning and sampling functions simultaneously for two adjacent containers 14. It then moves the two containers and performs sampling in the container it has just cleaned and cleaning in a new container. However, one skilled in this art may modify the system so that it may separately perform the waste removal operation in one container at one station, move this container over to another station, and then perform the sampling operation.

One skilled in the art may use a drive mechanism to lower the puncture tube and needle rather than use a lift mechanism to raise the containers.

## Claims

1. An automated assembly for removing waste material, such as entrapped sample and other debris, from the inside of a sample container (14,18) having an open top closed by a closure means (19), the assembly comprising:-
means (15,25) for holding and horizontally moving the container (14,18) to a predetermined location (16);
an elongate needle (56) connected to a waste container (71) by a tube (69), the needle having a sharp, penetrating distal end portion (60,64) provided with an opening proximate the distal end portion, the opening communicating through a central bore of the needle with the tube (69) and the waste container (71);
driving means (37,38) for providing relative vertical displacement between the holding means (25) and the needle (56) and providing a force for moving said penetrating distal end portion of said needle (56) through the closure means (19) into the container (14,18); and
pump means (70) communicating with the needle (56) for varying pressure and removing waste material from the inside surface of the closure member (19) and surrounding inside surface of the container (14,18) through the needle (56) and tube (69) to said waste container (71), so that the sample container (14,18) is cleaned prior to subsequent sampling, through a probe (66).

2. The automated assembly of Claim 1, further comprising a stripping means (75) for disengaging said needle means (56) from said sample container (14).

3. The automated assembly of Claim 1 or 2, wherein said needle means (56) is stationary and said drive means (37,38) includes a lift means (32) for moving said sample container (14) against said needle means.

4. The automated assembly of Claim 1, 2 or 3, wherein said needle means (56) includes a hollow body (60) with a sharpened end (61) which defines a plurality of openings (62).

5. The automated assembly of Claim 4, wherein said openings (62) in said needle means are arranged in rows around said needle means in staggered relation.

6. The automated assembly of any preceding claim, further comprising venting means (72,73,74) connected to said needle means (56) for venting said sample container (14).

7. An automated assembly according to any preceding claim in conjunction with apparatus to provide temporary access to a sample container (14), wherein the holding means (25) is constructed to support first and second sample containers (14) said apparatus comprising penetrating tube means (55) and the driving means (37,38) being operable to cause both the needle means (56) to penetrate the closure means (19) of the first sample container (14) and the penetrating tube means (55) to penetrate the closure means (19) of the second sample container (14) to provide a temporary opening therein, the apparatus including probe (66) insertable into the second sample container through said temporary opening to remove sample therefrom, place sample therein, or sense properties of a same therein.

8. The automated system of Claim 7, wherein said driving means (37,38) provides relative displacement between said first and second sample containers (14) and said needle means (56) and penetrating tube means (55) simultaneously.

9. An automated assembly according to Claim 8, wherein said penetrating tube means (55) comprises an elongate body defining a central bore and having a first and second end, said second end of said body being bevelled with a sharp portion, for penetrating said closure and for forming a cut in said closure, and a heel portion (H), said heel portion having a round shape and a smooth surface for moving the closure portion disposed around said cut to open the cut and allow the body to pass through the closure without removing any portion of the closure.

10. The automated assembly of Claim 9, wherein said elongate body is a round metal tube.

11. A method for automatically cleaning the inside surface of a stopper (18) which closes a container (19) containing a sample, said method utilizing means (25) for holding said container, a hollow needle (56) having a sharp distal end portion (60) and an opening (62), proximate thereto for penetrating the stopper of said container, driving means (37,38) for providing relative displacement between said container and said needle and for providing the force for moving said needle into said container, and pump means (70) communicating with said needle for removing the waste material from the inside surface of said stopper, said method comprising moving said needle (56) into said container (19) through said stopper (18) to a position in which the sharp distal end is above the level of the sample and operating the pump to withdraw waste from said inside surface of said stopper under negative pressure through the needle to a waste container (71), prior to sampling.

## Patentansprüche

1. Automatische Anordnung zum Entfernen von Abfallmaterial, wie z. B. einer eingeschlossenen Probe oder einem anderen Gewebsrest aus dem Inneren eines Probenbehälters (14, 18) mit einer offenen Oberseite, die mit einer Verschlußeinrichtung (19) verschlossen ist, wobei die Anordnung folgendes aufweist :
- Einrichtungen (15, 25) zum Halten und horizontalen Bewegen des Behälters (14, 18) zu einer vorbestimmten Stelle (16) ;
- eine verlängerte Nadel (56), die mittels eines Rohres (69) mit einem Abfallbehälter (71) verbunden ist, wobei die Nadel einen scharfen, eindringenden distalen Endabschnitt (60, 64) hat, der mit einer Öffnung in der Nähe des distalen Endabschnitts ausgestattet ist, wobei die Öffnung durch eine zentrale Bohrung der Nadel mit dem Rohr (69) und dem Abfallbehälter (71) kommuniziert;
- Antriebseinrichtungen (37, 38), um eine relative vertikale Verschiebung zwischen der Halteeinrichtung (25) und der Nadel (56) zur Verfügung zu stellen, und um eine Kraft zum Bewegen des eindringenden distalen Endabschnitts der Nadel (56) durch die Verschlußeinrichtung (19) in den Behälter (14, 18) hinein zur Verfügung zu stellen; und
- eine Pumpeinrichtung (70), die mit der Nadel (56) kommuniziert, um den Druck zu variieren und um Abfallmaterial von der Innenoberfläche des Verschlußbauteils (19) und der umgebenden Innenoberfläche des Behälters (14, 18) durch die Nadel (56) und das Rohr (69) zu dem Abfallbehälter (71) zu entfernen, so daß der Probenbehälter (14, 18) vor einer nachfolgenden Probennahme durch eine Sonde (66) gereinigt ist.

2. Automatische Anordnung nach Anspruch 1, die weiterhin eine Ablöseeinrichtung (75) aufweist, um die Nadeleinrichtung (56) von dem Probenbehälter (14) zu lösen.

3. Automatische Anordnung nach Anspruch 1 oder 2,
wobei die Nadeleinrichtung (56) ortsfest ist und die Antriebseinrichtung (37, 38) eine Hebeeinrichtung (32) umfaßt, um den Probenbehälter (14) gegen die Nadeleinrichtung zu bewegen.

4. Automatische Anordnung nach Anspruch 1, 2 oder 3,
wobei die Nadeleinrichtung (56) einen hohlen Körper (60) mit einem geschärften Ende (61) umfaßt, der eine Mehrzahl von Öffnungen (62) definiert.

5. Automatische Anordnung nach Anspruch 4,
wobei die Öffnungen (62) in der Nadeleinrichtung in Reihen rund um die Nadeleinrichtung in versetzter Beziehung angeordnet sind.

6. Automatische Anordnung nach einem der vorhergehenden Ansprüche, die weiterhin Lüftungseinrichtungen (72, 73, 74) umfaßt, die mit der Nadeleinrichtung (56) verbunden sind, um den Probenbehälter (40) zu belüften.

7. Automatische Anordnung nach einem der vorhergehenden Ansprüche, in Verbindung mit einer Vorrichtung, um einen zeitweiligen Zugriff auf einen Probenbehälter (14) zur Verfügung zu stellen, wobei die Halteeinrichtung (25) gestaltet ist, um erste und zweite Probenbehälter (14) zu halten, wobei die Vorrichtung eine eindringende Rohreinrichtung (55) aufweist und die Antriebseinrichtungen (27, 38) betriebsfähig sind, um zu bewirken, daß sowohl die Nadeleinrichtung (56) die Verschlußeinrichtung (19) des ersten Probenbehälters (14) durchdringt, als auch, daß die eindringende Rohreinrichtung (55) die Verschlußeinrichtung (19) des zweiten Probenbehälters (14) durchdringt, um eine zeitweilige Öffnung darin zur Verfügung zu stellen, wobei die Vorrichtung eine Sonde (66) umfaßt, die durch die zeitweilige Öffnung in den zweiten Probenbehälter einführbar ist, um die Probe daraus zu entfernen, eine Probe hineinzugeben oder Eigenschaften derselben darin zu erfassen.

8. Automatische Anordnung nach Anspruch 7,
wobei die Antriebsreinrichtungen (37, 38) gleichzeitig eine relative Verschiebung zwischen dem ersten und dem zweiten Probenbehälter (14) und der Nadeleinrichtung (56) und der eindringenden Rohreinrichtung (55) zur Verfügung stellen.

9. Automatische Anordnung nach Anspruch 8,
wobei die eindringende Rohreinrichtung (55) folgendes umfaßt:
- einen verlängerten Körper, der eine zentrale Bohrung definiert, und der ein erstes und ein zweites Ende hat, wobei das zweite Ende des Körpers mit einem scharfen Abschnitt abgeschrägt ist, um den Verschluß zu durchdringen und um einen Schnitt in dem Verschluß zu bilden, und
- einen Schrägabschnitt (H), wobei der Schrägabschnitt eine runde Form und eine glatte Oberfläche aufweist, um den Verschlußabschnitt zu bewegen, der rund um den Schnitt angeordnet ist, um den Schnitt zu Öffnen und dem Körper zu ermöglichen, durch den Verschluß hindurchzutreten, ohne irgendeinen Bereich des Verschlusses zu entfernen.

10. Automatische Anordnung nach Anspruch 9,
wobei der verlängerte Körper ein rundes Metallrohr ist.

11. Verfahren zum automatischen Reinigen der Innenoberfläche eines Verschlusses (19), der einen Behälter (18) verschließt, der eine Probe enthält, wobei das Verfahren folgendes verwendet:
- Einrichtungen (25) zum Halten des Behälters,
- eine hohle Nadel (56) mit einem scharfen distalen Endabschnitt (60) und einer nahe daran befindlichen Öffnung (62), um den Verschluß des Behälters zu durchdringen,
- Antriebseinrichtungen (37, 38), um eine relative Verschiebung zwischen dem Behälter und der Nadel zur Verfügung zu stellen und um die Kraft zum Bewegen der Nadel in den Behälter hinein zur Verfügung zu stellen, und
- eine Pumpeinrichtung (70), die mit der Nadel kommuniziert, um das Abfallmaterial von der Innenoberfläche des Verschlusses zu entfernen,
wobei das Verfahren folgendes umfaßt:
- Bewegen der Nadel (56) in den Behälter (18) durch den Verschluß (19) hinein in eine Position, in der das scharfe distale Ende über dem Niveau der Probe ist, und
- das Betreiben der Pumpe, um vor der Probennahme den Abfall von der Innenoberfläche des Verschlusses mittels eines Unterdrucks durch die Nadel zu einem Abfallbehälter (71) abzuziehen.

## Revendications

1. Ensemble automatique destiné à retirer les substances résiduaires, telles qu'un échantillon piégé ou d'autres débris, de l'intérieur d'un récipient contenant des échantillons (14, 18) ayant une partie supérieure ouverte, fermée par des moyens de fermeture (19), l'ensemble comprenant :
des moyens (15, 25) pour maintenir et déplacer horizontalement le récipient (14, 18) vers un emplacement prédéterminé (16) ;
une aiguille allongée (56) raccordée à un récipient pour résidus (71) par un tube (69), l'aiguille ayant une partie d'extrémité distale (60, 64) pénétrante et pointue munie d'une ouverture à proximité de la partie d'extrémité distale, l'ouverture communiquant au moyen d'un alésage central de l'aiguille avec le tube (69) et le récipient pour résidus (71) ;
des moyens d'actionnement (37, 38) pour fournir un déplacement vertical relatif entre les moyens de retenue (25) et l'aiguille (56) et fournissant une force afin de déplacer ladite partie d'extrémité distale pénétrante de ladite aiguille (56) à travers les moyens de fermeture (19) dans le récipient (14, 18) ; et
des moyens de pompe (70) communiquant avec l'aiguille (56) afin de modifier la pression et de retirer les substances résiduaires de la surface intérieure de l'élément de fermeture (19) et entourant la surface intérieure du récipient (14, 18) à travers l'aiguille (56) et le tube (69) jusqu'audit récipient pour résidus (71), de telle sorte que le récipient contenant des échantillons (14, 18) est nettoyé, avant un échantillonnage ultérieur, au moyen d'une sonde (66).

2. Ensemble automatique selon la revendication 1, comprenant en outre des moyens de démontage (75) pour désassembler lesdits moyens d'aiguille (56) dudit récipient contenant des échantillons (14).

3. Ensemble automatique selon la revendication 1 ou 2, dans lequel lesdits moyens d'aiguille (56) sont fixes et lesdits moyens d'actionnement (37, 38) comprennent des moyens de levage (32) pour déplacer ledit récipient contenant des échantillons (14) contre lesdits moyens d'aiguille.

4. Ensemble automatique selon la revendication 1, 2 ou 3, dans lequel lesdits moyens d'aiguille (56) comprennent un corps creux (60) avec une extrémité pointue (61) qui définit une pluralité d'ouvertures (62).

5. Ensemble automatique selon la revendication 4, dans lequel lesdites ouvertures (62) dans lesdits moyens d'aiguille sont agencées sous forme de rangées autour desdits moyens d'aiguille en relation décalée.

6. Ensemble automatique selon l'une quelconque des revendications précédentes, comprenant en outre des moyens de purge (72, 73, 74) raccordés auxdits moyens d'aiguille (56) pour purger ledit récipient contenant des échantillons (14).

7. Ensemble automatique selon l'une quelconque des revendications précédentes conjointement à un appareil pour fournir un accès provisoire à un récipient contenant des échantillons (14), dans lequel les moyens de retenue (25) sont construits pour supporter des premier et second récipients contenant des échantillons (14), ledit appareil comprenant des moyens de tube pénétrant (55) et les moyens d'actionnement (37, 38) pouvant fonctionner afin d'entraîner la pénétration à la fois des moyens d'aiguille (56) dans les moyens de fermeture (19) du premier récipient contenant un échantillon (14) et des moyens de tube pénétrant (55) dans les moyens de fermeture (19) du second récipient contenant des échantillons (14) pour y créer une ouverture provisoire, l'appareil comprenant une sonde (66) pouvant être insérée dans le second récipient contenant un échantillon au moyen de ladite ouverture provisoire afin d'en retirer l'échantillon, d'y placer l'échantillon ou d'y détecter les propriétés de celui-ci.

8. Système automatique selon la revendication 7, dans lequel lesdits moyens d'actionnement (37, 38) entraînent un déplacement relatif entre lesdits premier et second récipients contenant des échantillons (14) et lesdits moyens d'aiguille (56) et les moyens de tube pénétrant (55) en même temps.

9. Ensemble automatique selon la revendication 8, dans lequel lesdits moyens de tube pénétrant (55) comprennent un corps allongé définissant un alésage central et ayant des première et seconde extrémités, ladite seconde extrémité dudit corps étant biseautée avec une partie pointue, afin de pénétrer dans ladite fermeture et de former une incision dans ladite fermeture, et une partie de talon (H), ladite partie de talon ayant une forme arrondie et une surface lisse afin de déplacer la partie de fermeture disposée autour de ladite incision pour ouvrir l'incision et permettre au corps de traverser la fermeture sans retirer de partie de la fermeture.

10. Ensemble automatique selon la revendication 9, dans lequel ledit corps allongé est un tube métallique rond.

11. Procédé pour nettoyer automatiquement la surface intérieure d'un bouchon (18) qui ferme un récipient (19) contenant un échantillon, ledit procédé utilisant des moyens (25) pour maintenir ledit récipient, une aiguille creuse (56) ayant une partie d'extrémité distale pointue (60) et une ouverture (62), à proximité de celle-ci afin de pénétrer dans le bouchon dudit récipient, des moyens d'actionnement (37, 38) pour fournir un déplacement relatif entre ledit récipient et ladite aiguille et pour fournir la force de déplacement de ladite aiguille dans ledit récipient, et des moyens de pompe (70) communiquant avec ladite aiguille pour retirer les résidus de la surface intérieure dudit bouchon, ledit procédé comprenant le déplacement de ladite aiguille (56) dans ledit récipient (19) à travers ledit bouchon (18) dans une position où l'extrémité distale pointue est située au-dessus du niveau de l'échantillon et l'actionnement de la pompe afin de retirer les résidus de ladite surface intérieure dudit bouchon dans des conditions de dépression à travers l'aiguille jusque dans un récipient pour résidus (71) avant d'effectuer l'échantillonnage.
